# EUROPEAN PATENT SPECIFICATION

(11) **EP 4 238 383 B1**
(45) Date of publication and mention of the grant of the patent: **29.10.2025**
(21) Application number: 21885354.7
(22) Date of filing: 01.11.2021
(51) Int. Cl.: H04W 74/00, H04W 72/232, H04W 74/0808

(54) **DYNAMIC INDICATION OF USER EQUIPMENT INITIATED CHANNEL OCCUPANCY TIME**
DYNAMISCHE ANZEIGE DER VON EINEM BENUTZERGERÄT EINGELEITETEN KANALBELEGUNGSZEIT
INDICATION DYNAMIQUE DE TEMPS D'OCCUPATION DE CANAL INITIÉ PAR UN ÉQUIPEMENT UTILISATEUR

(30) Priority: 02.11.2020 WO PCT/CN2020/125785
(43) Date of publication of application: 06.09.2023
(73) Proprietor: QUALCOMM INCORPORATED, San Diego, California 92121-1714 (US)
(72) Inventor: XU, Changlong, San Diego, California 92121-1714 (US); SUN, Jing, San Diego, California 92121-1714 (US); ZHANG, Xiaoxia, San Diego, California 92121-1714 (US)
(74) Representative: Bardehle Pagenberg Partnerschaft mbB Patentanwälte Rechtsanwälte
(86) International application number: PCT/CN2021/127844
(87) International publication number: WO 2022/089628

(56) References cited:
- CN-A- 110 100 399
- CN-A- 111 601 392
- US-A1- 2016 360 553
- US-A1- 2020 322 988
- US-A1- 2020 322 988
- QUALCOMM INCORPORATED: "uplink enhancements for URLLC in unlicensed controlled environments", vol. RAN WG1, no. e-Meeting; 20200817 - 20200828, 8 August 2020 (2020-08-08), XP051918251, Retrieved from the Internet <URL:https://ftp.3gpp.org/tsg_ran/WG1_RL1/TSGR1_102-e/Docs/R1-2006801.zip R1-2006801 Uplink enhancements for URLLC in unlicensed controlled environments.docx> [retrieved on 20200809]
- QUALCOMM INCORPORATED: "uplink enhancements for URLLC in unlicensed controlled environments", 3GPP DRAFT; R1-2006801, vol. RAN WG1, 8 August 2020 (2020-08-08), pages 1 - 7, XP051918251

## Description

### CROSS-REFERENCE TO RELATED APPLICATION

This Patent Application claims priority to Patent Cooperation Treaty (PCT) Application No. PCT/CN2020/125785, filed on November 2, 2020, entitled "DYNAMIC INDICATION OF USER EQUIPMENT INITIATED CHANNEL OCCUPANCY TIME," and assigned to the assignee hereof.

### FIELD OF THE DISCLOSURE

Aspects of the present disclosure generally relate to wireless communication and to techniques and apparatuses for dynamically indicating a user equipment initiated channel occupancy time.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or "forward link") refers to the communication link from the BS to the UE, and "uplink" (or "reverse link") refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain usefu

QUALCOMM INCORPORATED: "uplink enhancements for URLLC in unlicensed controlled environments", 3GPP DRAFT; R1-2006801, published on 8 August 2020, discloses prior art.

### SUMMARY

The invention is set out in the appended set of claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, or artificial intelligence-enabled devices). Aspects may be implemented in chip-level components, modular components, non-modular components, non-chip-level components, device-level components, or system-level components. Devices incorporating described aspects and features may include additional components and features for implementation and practice of claimed and described aspects. For example, transmission and reception of wireless signals may include a number of components for analog and digital purposes (e.g., hardware components including antennas, radio frequency (RF) chains, power amplifiers, modulators, buffers, processors, interleavers, adders, or summers). It is intended that aspects described herein may be practiced in a wide variety of devices, components, systems, distributed arrangements, or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of an unlicensed radio frequency band, in accordance with the present disclosure.
Figs. 4A-4B are diagrams illustrating examples of a fixed frame period that includes a channel occupancy time during which one or more devices may conduct transmissions in an unlicensed channel, in accordance with the present disclosure.
Figs. 5A-5E are diagrams illustrating examples associated with dynamically indicating a UE-initiated channel occupancy time, in accordance with the present disclosure.
Figs. 6-7 are diagrams illustrating example processes associated with dynamically indicating a UE-initiated channel occupancy time, in accordance with the present disclosure.
Figs. 8-9 are block diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

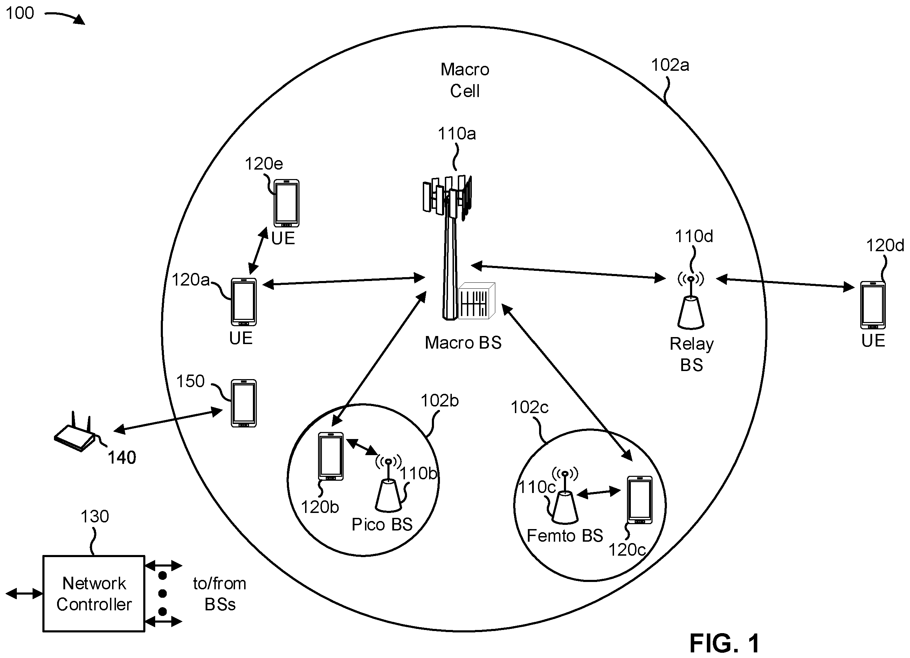

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, directly or indirectly, via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

In some aspects, devices of wireless network 100 may communicate with one another using a licensed radio frequency spectrum band and/or an unlicensed radio frequency spectrum band. For example, a base station 110 and a UE 120 may communicate using a RAT such as Licensed-Assisted Access (LAA), Enhanced LAA (eLAA), Further Enhanced LAA (feLAA), and/or NR-Unlicensed (NR-U), among other examples. In some aspects, a WLAN access point 140 and WLAN station 150 may communicate with one another using only the unlicensed radio frequency spectrum band (and not the licensed radio frequency spectrum band). The unlicensed radio frequency spectrum band may therefore be shared by the base stations 110, the UEs 120, the WLAN access points 140, the WLAN stations 150, and/or other devices. Because the unlicensed radio frequency spectrum band may be shared by devices operating under different protocols (e.g., different RATs), transmitting devices may need to contend for access to the unlicensed radio frequency spectrum band prior to transmitting over the unlicensed radio frequency spectrum band.

For example, in a shared or unlicensed frequency band, a transmitting device may contend against other devices for channel access before transmitting on a shared or unlicensed channel to reduce and/or prevent collisions on the shared or unlicensed channel. To contend for channel access, the transmitting device may perform a channel access procedure, such as a listen-before-talk (or listen-before-transmit) (LBT) procedure or another type of channel access procedure, for shared or unlicensed frequency band channel access. The channel access procedure may be performed to determine whether the physical channel (e.g., the radio resources of the channel) are free to use or are busy (e.g., in use by another wireless communication device such as another UE, an IoT device, and/or a WLAN device, among other examples). The channel access procedure may include sensing or measuring the physical channel (e.g., performing a reference signal received power (RSRP) measurement, detecting an energy level, or performing another type of measurement) during a channel access gap (which may also be referred to as a contention window) and determining whether the shared or unlicensed channel is free or busy based at least in part on the signals sensed or measured on the physical channel (e.g., based at least in part on whether the measurement satisfies a threshold). If the transmitting device determines that the channel access procedure was successful, the transmitting device may perform one or more transmissions on the shared or unlicensed channel during a transmission opportunity (TXOP), which may extend for a channel occupancy time (COT).

As indicated above, Fig. 1 is provided as an example. Other examples may differ from what is described with regard to Fig. 1.

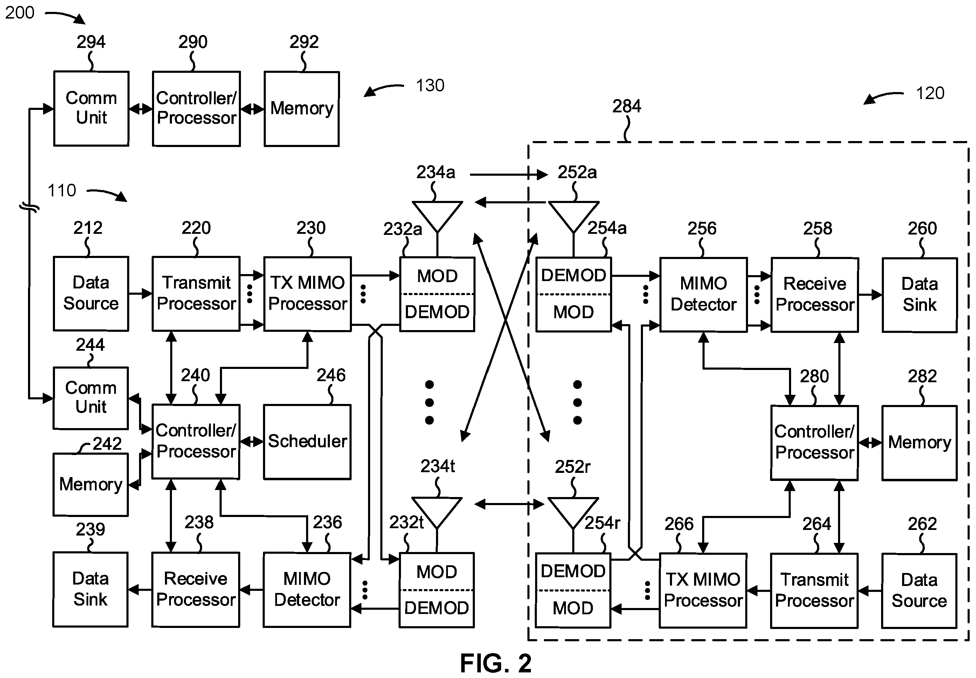

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general *T* ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide *T* output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

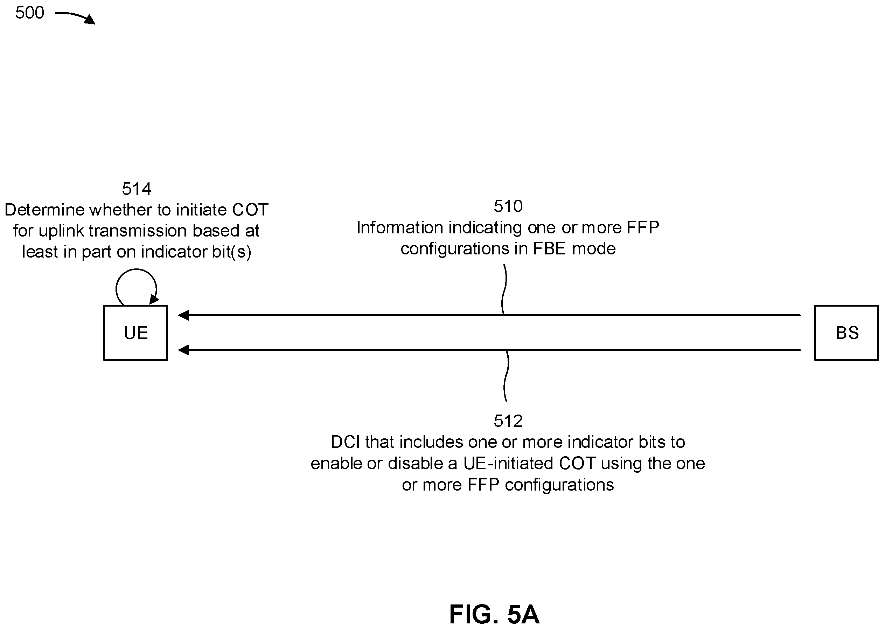

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 5A-5E and/or Figs. 6-9).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 5A-5E and/or Figs. 6-9).

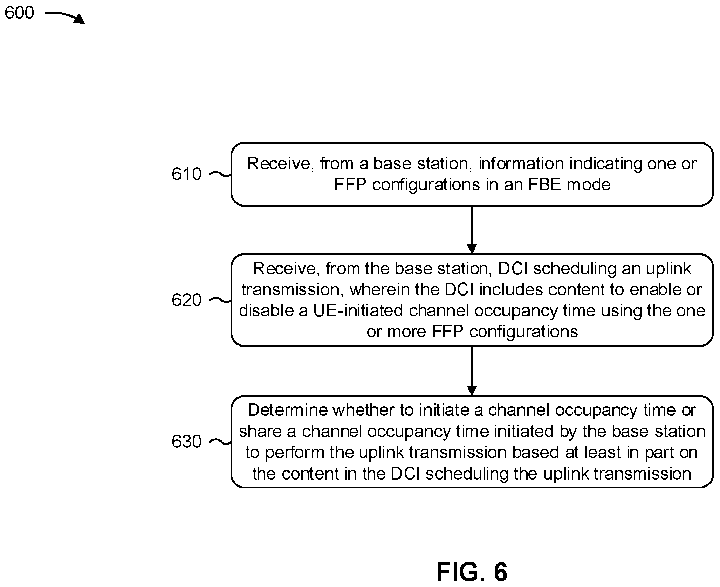

Controller/processor 240 of base station 110, controller/processor 280 of UE 120, and/or any other component(s) of Fig. 2 may perform one or more techniques associated with a dynamic indication of a UE-initiated channel occupancy time, as described in more detail elsewhere herein. For example, controller/processor 240 of base station 110, controller/processor 280 of UE 120, and/or any other component(s) of Fig. 2 may perform or direct operations of, for example, process 600 of Fig. 6 and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 600 of Fig. 6 and/or other processes as described herein. In some aspects, executing instructions may include running the instructions, converting the instructions, compiling the instructions, and/or interpreting the instructions, among other examples.

In some aspects, the UE 120 includes means for receiving, from the base station 110, information indicating one or more fixed frame period (FFP) configurations in a frame based equipment (FBE) mode, means for receiving, from the base station 110, downlink control information (DCI) scheduling an uplink transmission, wherein the DCI includes content to enable or disable a UE-initiated channel occupancy time using the one or more FFP configurations, and/or means for determining whether to initiate a channel occupancy time or share a channel occupancy time initiated by the base station to perform the uplink transmission based at least in part on the content in the DCI scheduling the uplink transmission. The means for the UE 120 to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the UE 120 includes means for initiating the channel occupancy time to perform the uplink transmission based at least in part on the content in the DCI enabling the UE-initiated channel occupancy time and the uplink transmission having a starting symbol aligned with a starting time of an FFP associated with the one or more FFP configurations and/or means for performing the uplink transmission at the starting time of the FFP based at least in part on initiating the channel occupancy time.

In some aspects, the UE 120 includes means for determining that the one or more FFP configurations are associated with multiple FFPs that have different starting times and/or means for selecting, among the multiple FFPs, the FFP in which to initiate the channel occupancy time based at least in part on the FFP having the starting time that is aligned with the starting symbol of the uplink transmission.

In some aspects, the UE 120 includes means for determining that the one or more FFP configurations are associated with multiple FFPs that have the same starting time and/or means for selecting the FFP in which to initiate the channel occupancy time based at least in part on one or more bits in the DCI that indicate, among the multiple FFPs, the FFP in which to initiate the channel occupancy time.

In some aspects, the UE 120 includes means for refraining from initiating the channel occupancy time based at least in part on determining that the content in the DCI disables the UE-initiated channel occupancy time, or based at least in part on determining that the uplink transmission has a starting symbol that is not aligned with a starting time of at least one FFP associated with the one or more FFP configurations.

In some aspects, the UE 120 includes means for performing the uplink transmission in a channel occupancy time initiated by the base station 110 based at least in part on determining that the uplink transmission and the DCI that enables or disables the UE-initiated channel occupancy time are in the channel occupancy time initiated by the base station 110.

In some aspects, the UE 120 includes means for cancelling the uplink transmission based at least in part on determining that the uplink transmission or the DCI that enables or disables the UE-initiated channel occupancy time is not in a channel occupancy time initiated by the base station 110.

In some aspects, the base station 110 includes means for transmitting, to the UE 120, information indicating one or more FFP configurations in an FBE mode; and/or means for transmitting, to the UE 120, DCI scheduling an uplink transmission, wherein the DCI includes content to enable or disable a UE-initiated channel occupancy time using the one or more FFP configurations. The means for the base station 110 to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

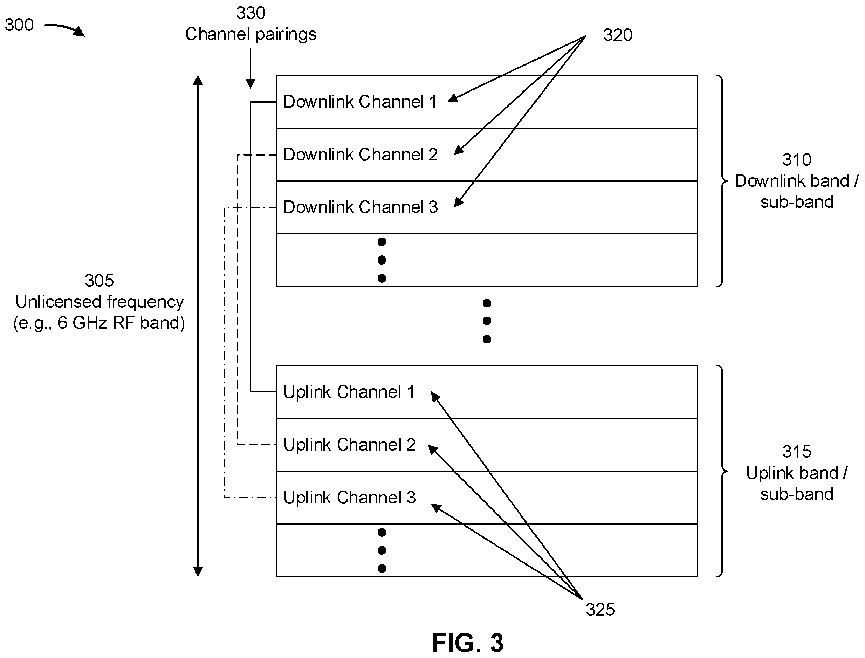

Fig. 3 is a diagram illustrating an example 300 of an unlicensed radio frequency band, in accordance with the present disclosure.

To accommodate increasing traffic demands, there have been various efforts to improve spectral efficiency in wireless networks and thereby increase network capacity (e.g., via use of higher order modulations, advanced MIMO antenna technologies, and/or multi-cell coordination techniques, among other examples). Another way to potentially improve network capacity is to expand system bandwidth. However, available spectrum in lower frequency bands that have traditionally been licensed or otherwise allocated to mobile network operators has become very scarce. Accordingly, various technologies have been developed to enable a cellular radio access technology (RAT) to operate in unlicensed or other shared spectrum. For example, Licensed-Assisted Access (LAA) uses carrier aggregation on a downlink to combine LTE in a licensed frequency band with LTE in an unlicensed frequency band (e.g., the 2.4 and/or 5 GHz bands already populated by wireless local area network (WLAN) or "Wi-Fi" devices). In other examples, Enhanced LAA (eLAA) and Further Enhanced LAA (feLAA) technologies enable both uplink and downlink LTE operation in unlicensed spectrum, MulteFire is an LTE-based technology that operates in unlicensed and shared spectrum in a standalone mode, NR-U enables NR operation in unlicensed spectrum, and/or the like.

For example, as shown in Fig. 3, and by reference number 305, an unlicensed radio frequency (RF) band, such as a 6 gigahertz (GHz) unlicensed RF band, may span a frequency range and may utilize frequency division duplexing (FDD). In an FDD system, a first band (e.g., a first sub-band of the unlicensed RF band) may be used for downlink communication, as shown by reference number 310, and a second band (e.g., a second sub-band of the unlicensed RF band) may be used for uplink communication, as shown by reference number 315. "Downlink communication" may refer to communication from a control node to a downstream node (e.g., a node that is controlled, configured, and/or scheduled by the control node), such as from a base station 110 to a UE 120, and/or from a WLAN access point 140 to a WLAN station 150, among other examples. "Uplink communication" may refer to communication from the downstream node to the control node, such as from a UE 120 to a base station 110, and/or from a WLAN station 150 to a WLAN access point 140, among other examples.

As further shown in Fig. 3, and by reference number 320, the downlink band may be divided into multiple downlink channels, sometimes referred to as downlink frequency channels. Similarly, as shown by reference number 325, the uplink band may be divided into multiple uplink channels, sometimes referred to as uplink frequency channels. As shown by reference number 330, each downlink channel may correspond to a single uplink channel. This may be referred to as channel pairing, where a downlink channel is paired with an uplink channel. In this configuration, a control node and a downstream node may use a particular downlink channel for downlink communication, and may use a particular uplink channel, that is paired with or corresponds to the particular downlink channel, for uplink communication. In example 300, downlink channel 1 is paired with uplink channel 1, downlink channel 2 is paired with uplink channel 2, downlink channel 3 is paired with uplink channel 3, and so on.

While the example 300 illustrated in Fig. 3 shows an unlicensed RF band that utilizes FDD, in some cases, an unlicensed communication channel may utilize time division duplexing (TDD). For example, in an unlicensed communication channel that utilizes TDD, uplink and downlink transmissions may be separated in time and conducted on the same frequency channel. However, unlike TDD in licensed spectrum, a subframe, a slot, a symbol, and/or another transmission time interval is not restricted to being configured for uplink communication or downlink communication, and may be configured for downlink transmissions by a base station or uplink transmissions by a UE. Furthermore, unlicensed communication may support dynamic TDD, where an uplink-downlink allocation may change over time to adapt to traffic conditions. For example, to enable dynamic TDD, a wireless device (e.g., a base station or a UE) may determine when to transmit, and in which resource to transmit, according to an indication of a channel occupancy time structure. In general, the channel occupancy time may include multiple transmission time intervals (e.g., multiple slots), and each transmission interval may include one or more downlink resources, one or more uplink resources, and/or one or more flexible resources. In this way, the channel occupancy time structure reduces power consumption and/or channel access delay.

In an unlicensed RF band (e.g., the 6 GHz unlicensed RF band), all or a portion of the frequency band may be licensed to entities referred to as fixed service incumbents. Accordingly, when operating a cellular RAT in unlicensed spectrum (e.g., using LAA, eLAA, feLAA, MulteFire, and/or NR-U), one challenge that arises is the need to ensure fair coexistence with incumbent (e.g., WLAN) devices that may be operating in the unlicensed spectrum. For example, prior to gaining access to and/or transmitting over an unlicensed channel, regulations may specify that a transmitting device (e.g., base station 110 and/or UE 120) is to perform a listen-before-talk (LBT) procedure to contend for access to the unlicensed channel. The LBT procedure may include a clear channel assessment (CCA) procedure to determine whether the unlicensed channel is available (e.g., unoccupied by other transmitters). In particular, a device performing a CCA procedure may detect an energy level on an unlicensed channel and determine whether the energy level satisfies (e.g., is less than or equal to) a threshold, sometimes referred to as an energy detection threshold. When the energy level satisfies (e.g., is below) the threshold, the LBT procedure is deemed to be successful and the transmitting device may gain access to the unlicensed channel for a duration referred to as a channel occupancy time. During the channel occupancy time, the transmitting device can perform one or more transmissions without having to perform any additional LBT operations. However, when the energy level fails to satisfy (e.g., equals or exceeds) the energy detection threshold, the LBT procedure fails and contention to access the unlicensed channel by the transmitting device is unsuccessful.

In cases where the LBT procedure fails because the CCA procedure results in a determination that the unlicensed channel band is unavailable (e.g., because the energy level detected on the unlicensed channel exceeds the energy detection threshold, indicating that another device is already using the channel), the CCA procedure may be performed again at a later time. In environments in which the transmitting device may be starved of access to an unlicensed channel (e.g., due to WLAN activity or transmissions by other devices), an extended CCA (eCCA) procedure may be employed to increase the likelihood that the transmitting device will successfully obtain access to the unlicensed channel. For example, a transmitting device performing an eCCA procedure may perform a random quantity of CCA procedures (from 1 to *q),* in accordance with an eCCA counter. If and/or when the transmitting device senses that the channel has become clear, the transmitting device may start a random wait period based on the eCCA counter and start to transmit if the channel remains clear over the random wait period.

As indicated above, Fig. 3 is provided as an example. Other examples may differ from what is described with regard to Fig. 3.

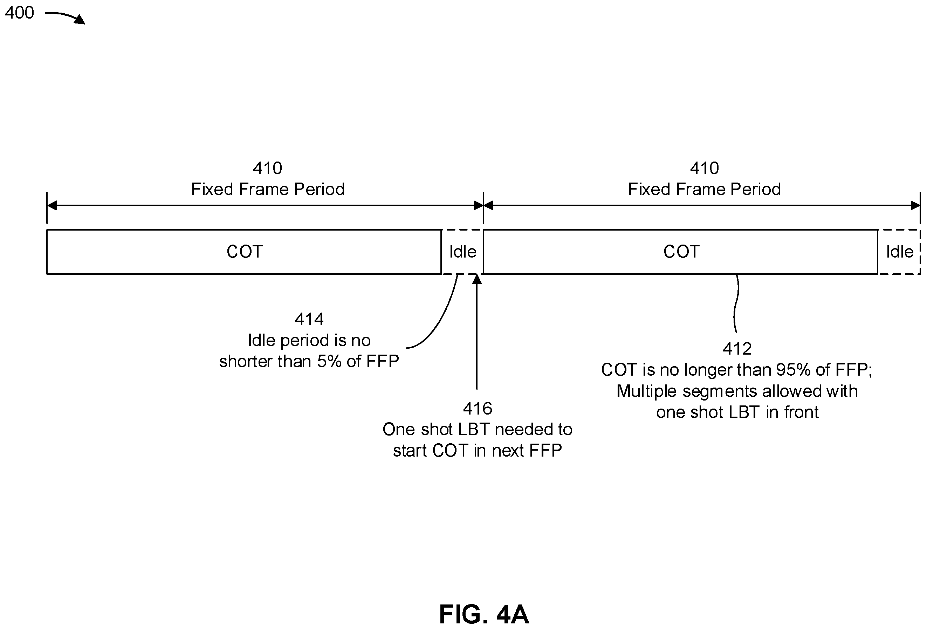

Figs. 4A-4B are diagrams illustrating examples 400 of a fixed frame period that includes a channel occupancy time during which one or more devices may conduct transmissions in an unlicensed channel, in accordance with the present disclosure.

In a wireless network that supports communication in unlicensed spectrum, an LBT procedure may be performed in either a load based equipment (LBE) mode or a frame based equipment (FBE) mode. In the LBE mode, a transmitting device may perform channel sensing in association with an LBT procedure at any time, and a random backoff is used in cases where the unlicensed channel is found to be busy. In the FBE mode, a base station may perform channel sensing in association with an LBT procedure at fixed time instances, and the base station waits until a fixed time period has elapsed before sensing the unlicensed channel again in cases where the unlicensed channel is found to be busy. In particular, the fixed time instances when the base station performs channel sensing may be defined according to a fixed frame period (FFP).

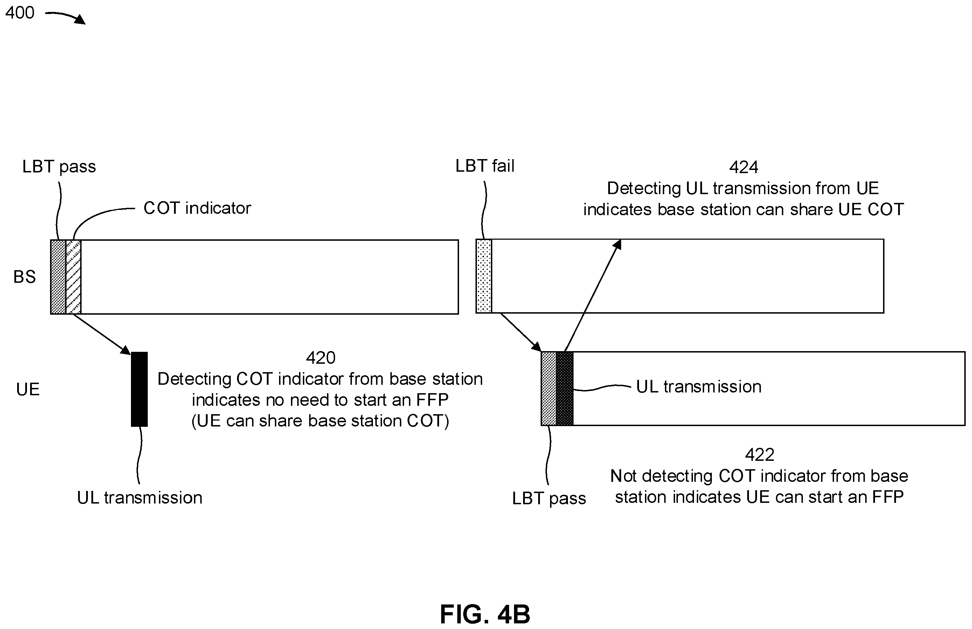

For example, Fig. 4A depicts an example FFP 410 that a base station may use to communicate in unlicensed spectrum. As shown in Fig. 4A, the FFP 410 may include a channel occupancy time (COT) 412 during which the base station may transmit one or more downlink communications. In some cases, as described below with reference to Fig. 4B, the base station may share the channel occupancy time 412 with a UE to enable the UE to transmit one or more uplink communications during the channel occupancy time 412 initiated by the base station. As shown in Fig. 4A, the FFP 410 may further include an idle period 414 (sometimes referred to as a gap period) at an end of the FFP 410, after the channel occupancy time 412. The idle period 414 of the FFP 410 provides time to perform an LBT procedure prior to a next FFP 410. The FFP 410, including the channel occupancy time 412 and the idle period 414, may have a duration of 1 millisecond (ms), 2 ms, 2.5 ms, 4 ms, 5 ms, or 10 ms. Within every two radio frames (e.g., even-numbered radio frames), starting positions of the FFPs 410 may be given by *i*P,* where *i =* {0, 1, ..., 20/*P*-1} and P is the duration of the FFP 410 in ms. For a given subcarrier spacing (SCS), the idle period 414 is a ceiling value for a minimum idle period allowed by regulations, divided by *Ts,* where the minimum duration of the idle period 414 is a maximum of 100 microseconds (µs) and 5% of the duration of the FFP 410, and *Ts* is the symbol duration for the given SCS. Accordingly, the idle period 414 may occupy no less than 5% of the duration of the FFP 410, and the channel occupancy time 412 may occupy no more than 95% of the duration of the FFP 410.

In FBE mode, an FFP configuration may be indicated in a system information block (e.g., SIB-1) or signaled to a UE in UE-specific radio resource control (RRC) signaling (e.g., for an FBE secondary cell use case). If the network indicates that FBE mode is to be used for fallback downlink and/or uplink grants, for an indication of Category 2 LBT (25 µs) (e.g., LBT without random backoff) or Category 4 LBT (e.g., LBT with random backoff and a variable size contention window), the UE may perform channel sensing measurements in one 9 µs slot (e.g., one shot LBT) within a 25 µs interval. UE transmissions within the FFP 410 may occur if the UE detects one or more downlink signals or downlink channels from the base station (e.g., a physical downlink control channel (PDCCH), a synchronization signal block (SSB), a physical broadcast channel (PBCH), remaining minimum system information (RMSI), a group common PDCCH (GC-PDCCH), and/or the like) within the FFP 410. The same 2-bit field may be used in LBE mode and FBE mode to indicate an LBT type, a cyclic prefix extension, a channel access priority class (CAPC) indication, and/or the like.

In Release 16 NR unlicensed (NR-U) FBE mode, only a base station can act as an initiating device to acquire a channel occupancy time, and a UE may act only as a responding device (e.g., sharing a channel occupancy time acquired by a base station). In NR-U FBE mode, channel access rules may thus be as follows. If the base station is to initiate a channel occupancy time 412, a Category 1 (Cat-1) LBT procedure may not apply and the base station may perform a Category 2 (Cat-2) LBT procedure in the idle period 414 just prior to an FFP 410. If the base station is to transmit a downlink burst in the channel occupancy time 412 acquired by the base station, the base station may perform a Cat-1 LBT procedure (e.g., no LBT) if a gap from a previous downlink burst or a previous uplink burst is within 16 µs, and may otherwise perform a Cat-2 LBT procedure if the gap is more than 16 µs. If the UE is to transmit an uplink burst in the channel occupancy time 412 acquired by the base station, the UE may perform a Cat-1 LBT procedure if the gap from the previous downlink or uplink burst is within 16 µs, and may otherwise perform the Cat-2 LBT procedure if the gap is greater than 16 µs. Notably, the Cat-2 LBT procedure for FBE mode may be different from the Cat-2 LBT procedure (25 µs or 16 µs) in LBE mode. In some aspects, one 9 µs measurement right before the transmission may be needed, with at least 4 µs for measurement. As shown by reference number 416, the 9 µs measurement needed to start a channel occupancy time 412 in a next FFP 410 may be referred to as a one-shot LBT. However, neither the Cat-1 LBT procedure nor the Cat-2 LBT procedure applies in cases where the UE is to initiate a channel occupancy time in FBE mode, because a UE cannot initiate a channel occupancy time in Release 16 NR-U FBE mode.

Accordingly, although a wireless network can be configured to use unlicensed spectrum to achieve faster data rates, provide a more responsive user experience, offload traffic from licensed spectrum, and/or the like, one limitation in FBE mode is that a UE cannot initiate a channel occupancy time to perform uplink transmissions. Accordingly, in order to improve access, efficiency, and/or latency for an unlicensed channel, a wireless network may permit a base station to share a channel occupancy time with a UE. For example, as shown in Fig. 4B, and by reference number 420, a base station may transmit a COT indicator to one or more UEs (e.g., using group common downlink control information (DCI)) in cases where the base station successfully contends for access to an unlicensed channel (e.g., by performing an LBT procedure that passes), and the COT indicator from the base station may indicate that the one or more UEs do not need to start an FFP. Instead, the one or more UEs can share the channel occupancy time acquired by the base station and transmit one or more uplink communications during the shared channel occupancy time.

In a fully controlled environment, permitting only the base station to contend for access to the unlicensed channel and share a channel occupancy time initiated by the base station with one or more UEs may be sufficient. For example, a "fully controlled" environment may refer to an environment that is restricted or otherwise controlled such that no other RAT or operators are operating in the coverage area. Consequently, in a fully controlled environment, an LBT procedure may always pass, even in FBE mode. In practice, however, a fully controlled environment may be difficult to achieve because there may be a chance that some other RAT is operating even in cases where the environment is supposedly cleared. For example, an employee working on an otherwise cleared factory floor may be carrying a WLAN station that transmits a WLAN access probe even though no WLAN access points are deployed in the environment. Accordingly, in an almost fully controlled environment, there is a small chance that an LBT procedure performed by a base station will fail, which may result in unacceptable performance for services having stringent quality of service requirements (e.g., ultra-reliable low-latency communication (URLLC), industrial internet of things (IIoT) applications, and/or the like). For example, even in cases where an LBT failure rate is as low as 10⁻³, there is a 10⁻³ probability that a URLLC packet scheduled to be delivered in an FFP cannot be delivered because both the base station and any UE(s) in communication with the base station have to surrender the entire FFP due to failure of an LBT procedure performed by the base station at the beginning of the FFP. The 10⁻³ failure probability may be insufficient to satisfy a URLLC reliability requirement, which typically requires a reliability of 10⁻⁶ or better. Furthermore, these problems are exacerbated in uncontrolled environments where there may be many incumbent and/or competing devices contending for access to the unlicensed channel.

Accordingly, in cases where only a base station can contend for access to an unlicensed channel in FBE mode, a UE may be unable to transmit on an uplink if an LBT procedure performed by the base station fails and/or the base station does not perform an LBT procedure because the base station does not have downlink data to transmit. Consequently, a UE may be permitted to act as an initiating device to perform an LBT procedure and acquire a channel occupancy time in the FBE mode in cases where the base station fails the LBT procedure or the UE otherwise does not detect a COT indicator from the base station (e.g., because the base station did not perform the LBT procedure due to a lack of downlink activity, due to impairments in a wireless channel interfering with downlink detection, and/or the like). For example, as shown by reference number 422, the UE may perform an LBT procedure to start an FFP and initiate a COT in which to transmit one or more uplink communications in cases where the UE does not detect a COT indicator from the base station. Accordingly, as further shown by reference number 424, the UE may transmit one or more uplink communications over the unlicensed channel if the LBT procedure passes, and detecting the uplink transmission from the UE may indicate that the base station can share the channel occupancy time acquired by the UE to perform downlink transmissions.

In some aspects, allowing the UE to initiate a channel occupancy time in FBE mode may improve access to the unlicensed channel, reduce uplink latency, conserve power, reduce interference, and/or the like. For example, when the UE initiates a channel occupancy time, the UE can use the channel occupancy time to transmit a physical random access channel (PRACH) for initial network access. In particular, during initial network access, the UE may not yet be configured with a system information radio network temporary identifier (SI-RNTI) or another known RNTI used to monitor for a downlink transmission (e.g., DCI scrambled with the SI-RNTI or other known RNTI) to determine whether the base station has acquired a channel occupancy time. This may restrict the ability of the UE to transmit a PRACH for initial network access, whereby enabling the UE to initiate a channel occupancy time may enable uplink PRACH transmissions before the UE has been configured to monitor for downlink transmissions from the base station.

Furthermore, allowing the UE to initiate a channel occupancy time enables the UE to transmit a physical uplink control channel (PUCCH) and/or a physical uplink shared channel (PUSCH) earlier in an FFP associated with a base station. For example, when sharing a channel occupancy time acquired by a base station, the UE has to confirm that the base station acquired the channel occupancy time by detecting downlink activity in an earlier portion of the FFP in order to enable transmissions in a later portion of the FFP (e.g., the UE needs to leave time in the earlier portion of the base station FFP to allow time for the downlink transmission from the base station and/or time for the UE to process the downlink transmission). Furthermore, allowing the UE to initiate a channel occupancy time may save power at the base station and/or reduce interference over the unlicensed channel. For example, in order to share a channel occupancy time and enable uplink transmission within the shared channel occupancy time, the base station needs to actively transmit one or more downlink communications in the earlier portion of the FFP, even if the base station does not have a need to transmit the downlink communication(s). This may result in additional power consumption at the base station and extra interference on the unlicensed channel, which can be avoided by allowing the UE to initiate a channel occupancy time. Furthermore, allowing the UE to initiate a channel occupancy time rather than relying on sharing a channel occupancy time acquired by the base station may avoid problems that may otherwise arise where downlink signal detection has a reliability limitation. However, existing wireless networks lack mechanisms to dynamically indicate whether a UE is permitted to initiate a channel occupancy time to perform an uplink transmission.

Some aspects described herein relate to techniques and apparatuses for a dynamic indication of whether a UE-initiated channel occupancy time is enabled or disabled. For example, in some aspects, a base station may configure one or more FFPs for a UE (e.g., semi-statically using RRC signaling), and may include one or more indicator bits in DCI to indicate whether the UE-initiated channel occupancy time is enabled or disabled. In some aspects, the one or more indicator bits may be a new or dedicated DCI field that indicates whether the UE-initiated channel occupancy time is enabled or disabled, or one or more existing DCI fields may be used to indicate whether the UE-initiated channel occupancy time is enabled or disabled. For example, an LBT type field in fallback DCI and/or non-fallback DCI may be used, where LBT type may be a Cat-1 LBT (no LBT) to indicate that the UE-initiated channel occupancy time is disabled or a Cat-2 LBT (LBT without random backoff) to indicate that the UE-initiated channel occupancy time is enabled. In this way, the UE may initiate a channel occupancy time and perform the uplink transmission (e.g., a PUCCH and/or a PUSCH associated with a configured grant and/or a dynamic uplink grant) using the UE-initiated channel occupancy time based at least in part on the DCI enabling the UE-initiated channel occupancy time. Additionally, or alternatively, the UE may refrain from initiating a channel occupancy time based at least in part on the DCI disabling the UE-initiated channel occupancy time and may instead cancel the uplink transmission or perform the uplink transmission using a channel occupancy time shared by the base station.

As indicated above, Figs. 4A-4B are provided as an example. Other examples may differ from what is described with regard to Figs. 4A-4B.

Figs. 5A-5E are diagrams illustrating examples 500 associated with dynamically indicating a UE-initiated channel occupancy time, in accordance with the present disclosure. As shown in Fig. 5A, examples 500 include a base station communicating with a UE in a wireless network. As described herein, the base station and the UE may communicate on an uplink and a downlink using one or more unlicensed channels in FBE mode.

As shown in Fig. 5A, and by reference number 510, the base station may transmit, and the UE may receive, information indicating one or more FFP configurations for the UE in the FBE mode. For example, in some aspects, the one or more FFP configurations may each include a start time that corresponds to a start time for a UE-initiated channel occupancy time. Furthermore, in some aspects, each FFP configuration includes an idle period that occupies no less than 5% of the FFP duration. In some aspects, the one or more FFP configurations may be configured in a semi-static channel access mode (e.g., FBE mode), where parameters for the one or more FFP configurations may be indicated to the UE semi-statically using dedicated RRC signaling. Additionally, or alternatively, the base station may indicate the one or more FFP configurations to the UE in a system information block (e.g., SIB-1). In some aspects, the one or more FFP configurations may be explicitly indicated, or the one or more FFP configurations may be implicitly indicated based at least in part on one or more higher-layer parameters.

Accordingly, as described herein, the base station may generally control a structure (e.g., FFP parameters) associated with the one or more FFP configurations that support a UE-initiated channel occupancy time, which may change infrequently (e.g., regulations may specify that an FFP configuration cannot be changed within 200 ms or another suitable time period). Furthermore, as described herein, the base station may configure a dynamic indication to indicate whether a UE is permitted to initiate a channel occupancy time in order to transmit an uplink channel or an uplink signal using the one or more FFP configurations.

For example, as further shown in Fig. 5A, and by reference number 512, the base station may transmit, and the UE may receive, DCI that schedules an uplink transmission and includes content to enable or disable a UE-initiated channel occupancy time using the one or more FFP configurations. For example, in some aspects, the content to enable or disable the UE-initiated channel occupancy time may include one or more indicator bits provided in a new or dedicated field of a fallback or a non-fallback DCI. Additionally, or alternatively, one or more existing content fields and/or combinations of content fields in a fallback or a non-fallback DCI may be used to indicate whether the UE-initiated channel occupancy time is enabled or disabled.

For example, in a semi-static channel access mode in unlicensed spectrum, fallback DCI for an uplink grant and/or a downlink grant may include a two-bit field to signal an LBT type and a cyclic prefix extension, and a UE may implicitly determine that the base station used a particular CAPC (e.g., four) to acquire a channel occupancy time shared with the UE, or may autonomously select a CAPC for a UE-initiated channel occupancy time (e.g., using a mapping between priority classes and traffic classes). Additionally, or alternatively, non-fallback DCI for an uplink grant may include up to six (6) bits to jointly encode an LBT type, a cyclic prefix extension, and a CAPC value. Accordingly, in some aspects, the content in the scheduling DCI that indicates whether the UE is to perform the uplink transmission by initiating a channel occupancy time or by sharing a channel occupancy time initiated by the base station may correspond to one or more bits that are used to indicate an LBT type in a fallback or non-fallback DCI. For example, the scheduling DCI may indicate a Category 1 (Cat-1) LBT, meaning no LBT, to disable the UE-initiated channel occupancy time, and may indicate a Category 2 (Cat-2) LBT, or LBT without random backoff, to enable the UE-initiated channel occupancy time.

In some aspects, the DCI may enable or disable the UE-initiated channel occupancy time with respect to any scheduled or configured uplink channel and/or uplink signal when the UE is in an RRC connected mode. For example, the DCI may enable or disable the UE-initiated channel occupancy time for a sounding reference signal (SRS), a PUCCH, a PUSCH associated with a configured grant (CG-PUSCH), and/or a PUSCH associated with a dynamic grant (DG-PUSCH), among other examples. In some aspects, in cases where the DCI dynamically indicates whether the UE-initiated channel occupancy time is enabled or disabled for a DG-PUSCH, the dynamic uplink grant may be included in the DCI that enables or disables the UE-initiated channel occupancy time or in a separate DCI.

As further shown in Fig. 5A, and by reference number 514, the UE may determine whether to initiate a channel occupancy time or share a channel occupancy time initiated by the base station when performing an upcoming uplink transmission (e.g., an SRS transmission, a PUCCH transmission, a CG-PUSCH transmission, and/or a DG-PUSCH transmission) based at least in part on the content in the DCI that schedules the upcoming uplink transmission. For example, as described in further detail herein, the UE may initiate a channel occupancy time and perform the uplink transmission using the UE-initiated channel occupancy time in cases where the content of the DCI enables the UE-initiated channel occupancy time and the uplink transmission has a starting symbol that aligns with a starting time of an FFP associated with the one or more FFP configurations. Otherwise, in cases where the content of the DCI disables the UE-initiated channel occupancy time and/or the uplink transmission has a starting symbol that is not aligned with the starting time of an FFP associated with the one or more FFP configurations, the UE may refrain from initiating a channel occupancy time. In such cases, the UE may perform the uplink transmission using a channel occupancy time initiated or otherwise acquired by the base station, or the UE may cancel the uplink transmission in cases where the UE does not detect a channel occupancy time acquired by the base station (e.g., where the uplink transmission and the DCI that disables the UE-initiated channel occupancy time are not within the same base station channel occupancy time).

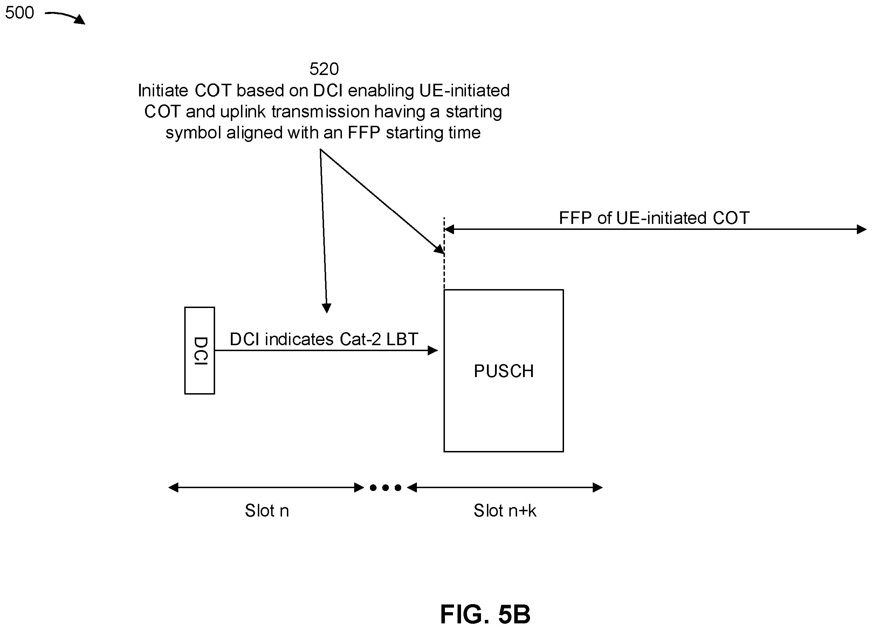

For example, referring to Fig. 5B, the base station may configure the UE with a single FFP configuration and dynamically indicate whether a UE-initiated channel occupancy time is enabled or disabled for an uplink transmission. As described above, the DCI content may include one or more new or dedicated indicator bits to indicate whether a UE-initiated channel occupancy time is enabled or disabled, or one or more existing content fields that are included in DCI(s) for downlink and/or uplink grants may be used to indicate whether the UE-initiated channel occupancy time is enabled or disabled for the uplink transmission. For example, in some aspects, the one or more indicator bits may indicate a first LBT type (e.g., Cat-1 LBT, or no LBT) to disable the UE-initiated channel occupancy time or may indicate a second LBT type (e.g., Cat-2 LBT, or LBT without random backoff) to enable the UE-initiated channel occupancy time. Accordingly, as shown by reference number 520, the UE may initiate a channel occupancy time and perform the uplink transmission using the UE-initiated channel occupancy time in cases where the DCI enables the UE-initiated channel occupancy time (e.g., indicates a Cat-2 LBT) and the uplink transmission has a starting symbol aligned with a starting time of the configured FFP. Otherwise, in cases where the DCI disables the UE-initiated channel occupancy time (e.g., indicates a Cat-1 LBT) and/or the starting symbol of the uplink transmission is not aligned with the starting time of the configured FFP, the UE may refrain from initiating a channel occupancy time. In such cases, the UE may perform the uplink transmission using a channel occupancy time that is initiated by the base station and shared with the UE (e.g., where the uplink transmission and the DCI disabling the UE-initiated channel occupancy time are both within the same base station channel occupancy time). Alternatively, if a base station channel occupancy time is not detected, the UE may cancel the uplink transmission.

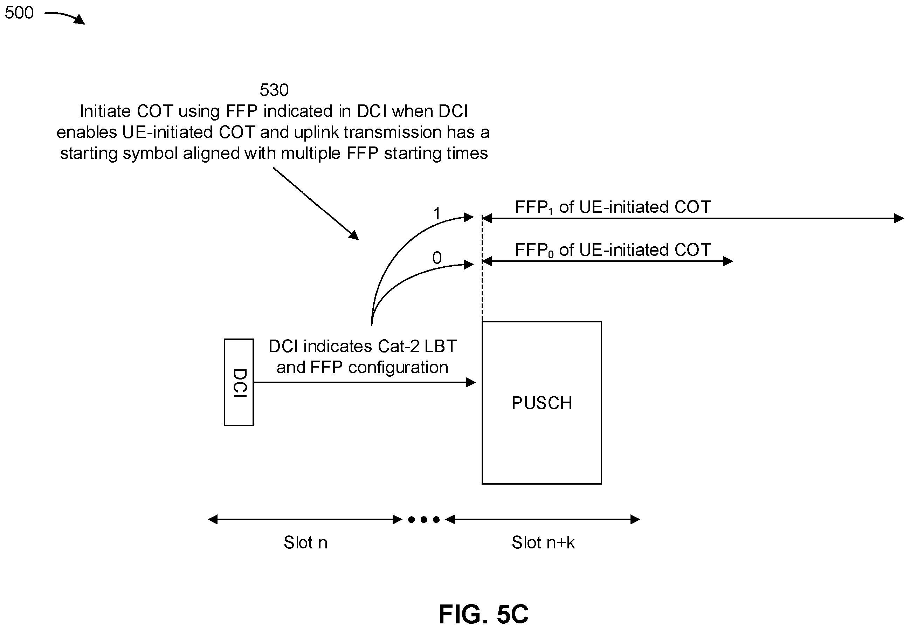

In some aspects, referring to Fig. 5C, the base station may configure the UE with multiple FFP configurations that have the same starting time and dynamically indicate whether a UE-initiated channel occupancy time is enabled or disabled for an uplink transmission. In this case, the UE may be configured with N FFP configurations, and the DCI may include n bits to indicate which FFP configuration the UE is to use to initiate a channel occupancy time (if enabled), where N is an integer having a value greater than one (1) and *n = ceil*(log₂ *N*))*.* For example, the DCI may include one (1) bit to indicate which FFP configuration the UE is to use to initiate a channel occupancy time when the UE is configured with up to two (2) FFP configurations, two (2) bits when the UE is configured with three (3) or four (4) FFP configurations, and/or three (3) bits when the UE is configured with between five (5) and eight (8) FFP configurations, among other examples. In this case, as shown by reference number 530, the UE may initiate a channel occupancy time and perform the uplink transmission using the UE-initiated channel occupancy time when the one or more indicator bits in the DCI enable the UE-initiated channel occupancy time and the uplink transmission has a starting symbol aligned with the starting times of the multiple FFP configurations that have the same starting time. In this case, as further shown in Fig. 5C, the DCI may indicate the FFP configuration to be used. For example, in Fig. 5C, the UE is configured with two (2) FFP configurations, and the DCI includes a one-bit value (either a zero or a one) to indicate which FFP configuration to use. Otherwise, in cases where the DCI disables the UE-initiated channel occupancy time (e.g., indicates a Cat-1 LBT) and/or the starting symbol of the uplink transmission is not aligned with the starting time of the multiple FFPs, the UE may refrain from initiating a channel occupancy time. In such cases, the UE may perform the uplink transmission using a channel occupancy time that is initiated by the base station and shared with the UE (e.g., where the uplink transmission and the DCI disabling the UE-initiated channel occupancy time are both within the same base station channel occupancy time) or cancel the uplink transmission if a base station channel occupancy time is not detected.

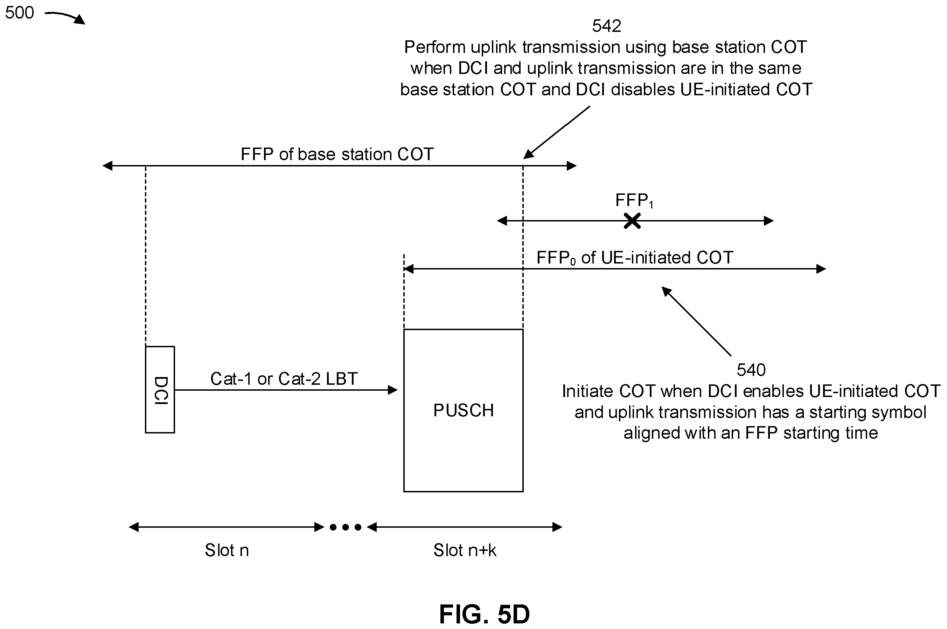

In some aspects, referring to Fig. 5D, the base station may configure the UE with multiple FFP configurations that have different starting times and dynamically indicate whether a UE-initiated channel occupancy time is enabled or disabled for an uplink transmission. In this case, as shown by reference number 540, the UE may initiate a channel occupancy time and perform the uplink transmission using the UE-initiated channel occupancy time when the one or more indicator bits in the DCI enable the UE-initiated channel occupancy time and the uplink transmission has a starting symbol aligned with the starting time of at least one of the multiple FFP configurations. For example, as shown in Fig. 5D, the UE is configured with a first FFP (shown as FFP₀) that has a starting time aligned with the starting symbol of the uplink transmission and a second FFP (shown as FFP₁) with a starting time that is not aligned with the starting symbol of the uplink transmission. Accordingly, when the DCI enables the UE-initiated channel occupancy time (e.g., indicates a Cat-2 LBT), the UE may select, among the multiple FFP configurations, an FFP with a starting time that is aligned with the starting symbol of the uplink transmission and may initiate the channel occupancy time in the selected FFP (e.g., FFP₀ in the example shown in Fig. 5D). In such cases, the UE may initiate the channel occupancy time within a channel occupancy time acquired by the base station, and may relinquish sharing the channel occupancy time of the base station with a one-shot LBT.

Alternatively, in some cases, the starting symbol of the uplink transmission may not be aligned with any of the FFPs configured for the UE, or the DCI may indicate that a UE-initiated channel occupancy time is disabled (e.g., by indicating a Cat-1 LBT). In such cases, the UE may refrain from initiating a channel occupancy time, but may still be able to perform the uplink transmission using a channel occupancy time acquired by the base station. For example, as shown by reference number 542, the UE may perform the uplink transmission using a channel occupancy time acquired by the base station in cases where the uplink transmission and the DCI indicating whether the UE-initiated channel occupancy time is enabled or disabled are within the same base station channel occupancy time. In this case, where the DCI indicates that the UE-initiated channel occupancy time is disabled and/or the starting symbol of the uplink transmission is not aligned with any of the FFPs configured for the UE, the UE may perform the uplink transmission in the base station channel occupancy time and follow the idle period of the base station channel occupancy time. In this case, the UE may refrain from initiating a channel occupancy time and/or sharing a channel occupancy time with the base station with a one-shot LBT. Accordingly, in cases where the UE performs the uplink transmission in the base station channel occupancy time, the uplink transmission has to be within 16 µs of the previous transmission (e.g., for a Cat-1 LBT).

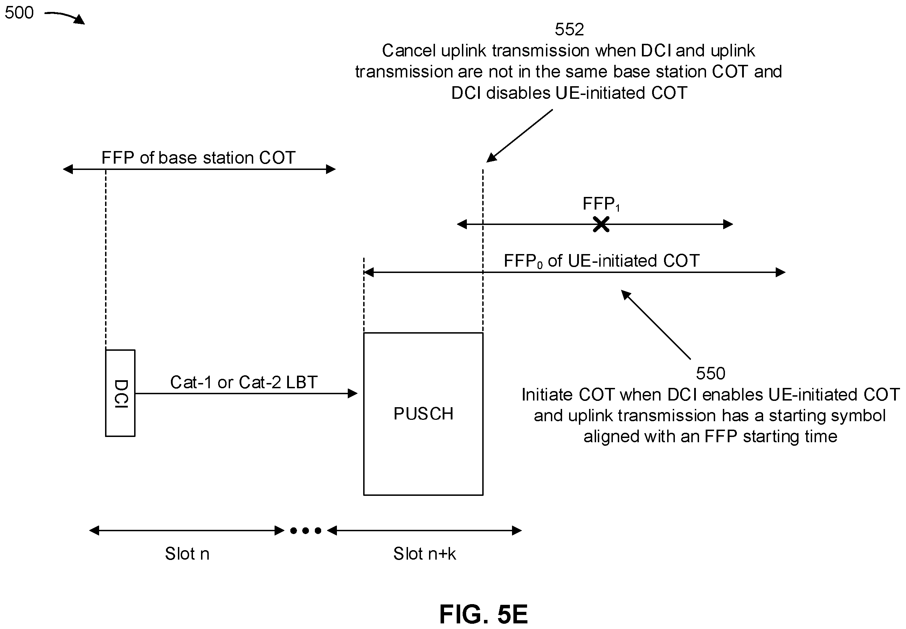

In some aspects, referring to Fig. 5E, the base station may configure the UE with multiple FFP configurations that have different starting times and dynamically indicate whether a UE-initiated channel occupancy time is enabled or disabled for an uplink transmission. As shown by reference number 550, the UE may initiate a channel occupancy time and perform the uplink transmission using the UE-initiated channel occupancy time when the one or more indicator bits in the DCI enable the UE-initiated channel occupancy time and the uplink transmission has a starting symbol aligned with the starting time of at least one of the multiple FFP configurations. Accordingly, when the UE is configured with multiple FFP configurations that have different starting times, the UE may initiate a channel occupancy time only in cases where the DCI enables the UE-initiated channel occupancy time (e.g., indicates a Cat-2 LBT) and the uplink transmission has a starting symbol aligned with an FFP starting point. In such cases, the UE may perform the uplink transmission using the UE-initiated channel occupancy time, and may relinquish sharing the next base station channel occupancy time if a base station channel occupancy time is subsequently detected.

Alternatively, in some cases, the starting symbol of the uplink transmission may not be aligned with any of the FFPs configured for the UE, or the DCI may indicate that a UE-initiated channel occupancy time is disabled (e.g., by indicating a Cat-1 LBT). In such cases, the UE may refrain from initiating a channel occupancy time. Furthermore, in the example shown in Fig. 5E, the uplink transmission and the DCI that indicates whether the UE-initiated channel occupancy time is enabled or disabled are not within the same base station channel occupancy time. In such cases, as shown by reference number 552, the UE may be unable to perform the uplink transmission in the base station channel occupancy time and may cancel the uplink transmission.

As indicated above, Figs. 5A-5E are provided as an example. Other examples may differ from what is described with regard to Figs. 5A-5E.

Fig. 6 is a diagram illustrating an example process 600 performed, for example, by a UE, in accordance with the present disclosure. Example process 600 is an example where the UE (e.g., UE 120) performs operations associated with a dynamic indication of a UE-initiated channel occupancy time.

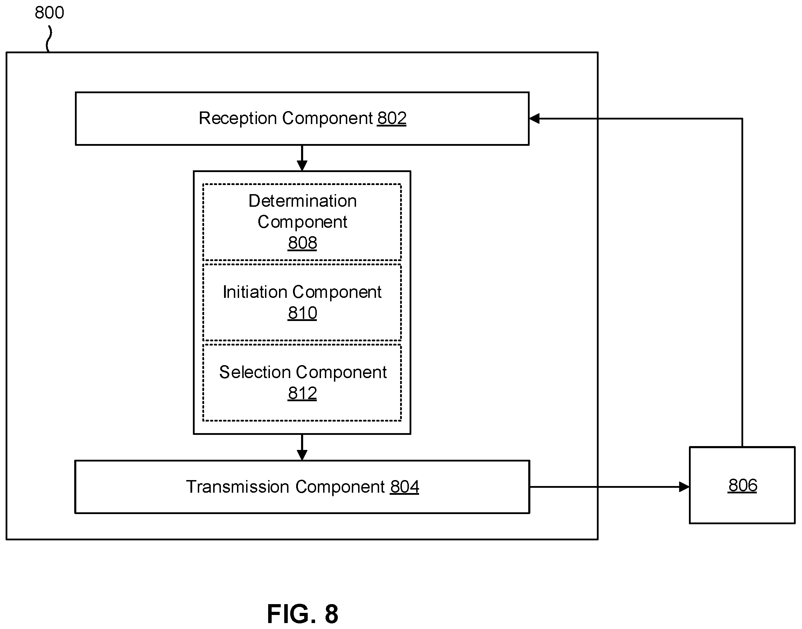

As shown in Fig. 6, in some aspects, process 600 may include receiving, from a base station, information indicating one or more FFP configurations in an FBE mode (block 610). For example, the UE (e.g., using reception component 802, depicted in Fig. 8) may receive, from a base station, information indicating one or more FFP configurations in an FBE mode, as described above.

As further shown in Fig. 6, in some aspects, process 600 may include receiving, from the base station, DCI scheduling an uplink transmission, wherein the DCI includes content to enable or disable a UE-initiated channel occupancy time using the one or more FFP configurations (block 620). For example, the UE (e.g., using reception component 802, depicted in Fig. 8) may receive, from the base station, DCI scheduling an uplink transmission, wherein the DCI includes content to enable or disable a UE-initiated channel occupancy time using the one or more FFP configurations, as described above.

As further shown in Fig. 6, in some aspects, process 600 may include determining whether to initiate a channel occupancy time or share a channel occupancy time initiated by the base station to perform the uplink transmission based at least in part on the content in the DCI scheduling the uplink transmission (block 630). For example, the UE (e.g., using determination component 808, depicted in Fig. 8) may determine whether to initiate a channel occupancy time or share a channel occupancy time initiated by the base station to perform the uplink transmission based at least in part on the content in the DCI scheduling the uplink transmission, as described above.

Process 600 may include additional aspects, such as any single aspect or any combination of aspects described below and/or in connection with one or more other processes described elsewhere herein.

In a first aspect, the content in the DCI indicates a first LBT type to enable the UE-initiated channel occupancy time, or a second LBT type to disable the UE-initiated channel occupancy time.

In a second aspect, alone or in combination with the first aspect, the first LBT type is a Category 2 LBT type and the second LBT type is a Category 1 LBT type.

In a third aspect, alone or in combination with one or more of the first and second aspects, the one or more FFP configurations are configured semi-statically using RRC signaling.

In a fourth aspect, alone or in combination with one or more of the first through third aspects, process 600 includes initiating the channel occupancy time to perform the uplink transmission based at least in part on the content in the DCI enabling the UE-initiated channel occupancy time and the uplink transmission having a starting symbol aligned with a starting time of an FFP associated with the one or more FFP configurations, and performing the uplink transmission at the starting time of the FFP based at least in part on initiating the channel occupancy time.

In a fifth aspect, alone or in combination with one or more of the first through fourth aspects, process 600 includes determining that the one or more FFP configurations are associated with multiple FFPs that have different starting times, and selecting, among the multiple FFPs, the FFP in which to initiate the channel occupancy time based at least in part on the FFP having the starting time that is aligned with the starting symbol of the uplink transmission.

In a sixth aspect, alone or in combination with one or more of the first through fifth aspects, process 600 includes determining that the one or more FFP configurations are associated with multiple FFPs that have the same starting time, and selecting the FFP in which to initiate the channel occupancy time based at least in part on one or more bits in the DCI that indicate, among the multiple FFPs, the FFP in which to initiate the channel occupancy time.

In a seventh aspect, alone or in combination with one or more of the first through sixth aspects, process 600 includes refraining from initiating the channel occupancy time based at least in part on determining that the content in the DCI disables the UE-initiated channel occupancy time, or based at least in part on determining that the uplink transmission has a starting symbol that is not aligned with a starting time of at least one FFP associated with the one or more FFP configurations.

In an eighth aspect, alone or in combination with one or more of the first through seventh aspects, process 600 includes performing the uplink transmission in a channel occupancy time initiated by the base station based at least in part on determining that the uplink transmission and the DCI that enables or disables the UE-initiated channel occupancy time are in the channel occupancy time initiated by the base station.

In a ninth aspect, alone or in combination with one or more of the first through eighth aspects, process 600 includes cancelling the uplink transmission based at least in part on determining that the uplink transmission or the DCI that enables or disables the UE-initiated channel occupancy time is not in a channel occupancy time initiated by the base station.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

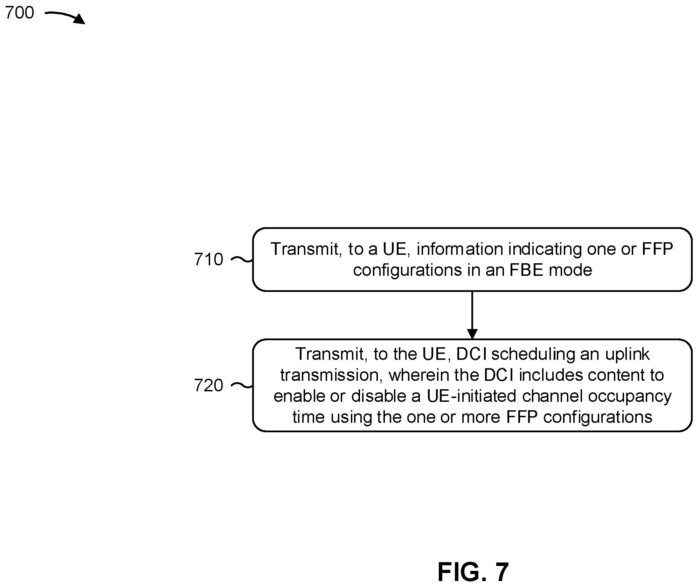

Fig. 7 is a diagram illustrating an example process 700 performed, for example, by a base station, in accordance with the present disclosure. Example process 700 is an example where the base station (e.g., base station 110) performs operations associated with a dynamic indication of a UE-initiated channel occupancy time.

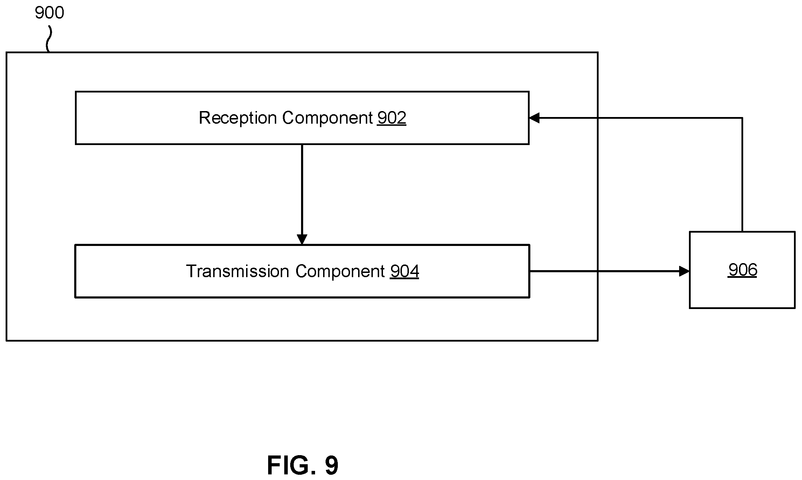

As shown in Fig. 7, in some aspects, process 700 may include transmitting, to a UE, information indicating one or more FFP configurations in an FBE mode (block 710). For example, the base station (e.g., using transmission component 904, depicted in Fig. 9) may transmit, to a UE, information indicating one or more FFP configurations in an FBE mode, as described above.

As further shown in Fig. 7, in some aspects, process 700 may include transmitting, to the UE, DCI scheduling an uplink transmission, wherein the DCI includes content to enable or disable a UE-initiated channel occupancy time using the one or more FFP configurations (block 720). For example, the base station (e.g., using transmission component 904, depicted in Fig. 9) may transmit, to the UE, DCI scheduling an uplink transmission, wherein the DCI includes content to enable or disable a UE-initiated channel occupancy time using the one or more FFP configurations, as described above.

Process 700 may include additional aspects, such as any single aspect or any combination of aspects described below and/or in connection with one or more other processes described elsewhere herein.

In a first aspect, the content in the DCI indicates a first LBT type to enable the UE-initiated channel occupancy time, or a second LBT type to disable the UE-initiated channel occupancy time.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a block diagram of an example apparatus 800 for wireless communication. The apparatus 800 may be a UE, or a UE may include the apparatus 800. In some aspects, the apparatus 800 includes a reception component 802 and a transmission component 804, which may be in communication with one another (for example, via one or more buses and/or one or more other components). As shown, the apparatus 800 may communicate with another apparatus 806 (such as a UE, a base station, or another wireless communication device) using the reception component 802 and the transmission component 804. As further shown, the apparatus 800 may include one or more of a determination component 808, an initiation component 810, or a selection component 812, among other examples.

In some aspects, the apparatus 800 may be configured to perform one or more operations described herein in connection with Figs. 5A-5E. Additionally, or alternatively, the apparatus 800 may be configured to perform one or more processes described herein, such as process 600 of Fig. 6. In some aspects, the apparatus 800 and/or one or more components shown in Fig. 8 may include one or more components of the UE described above in connection with Fig. 2. Additionally, or alternatively, one or more components shown in Fig. 8 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 802 may receive communications, such as reference signals, control information, data communications, or a combination thereof, from the apparatus 806. The reception component 802 may provide received communications to one or more other components of the apparatus 800. In some aspects, the reception component 802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 806. In some aspects, the reception component 802 may include one or more antennas, a demodulator, a MIMO detector, a receive processor, a controller/processor, a memory, or a combination thereof, of the UE described above in connection with Fig. 2.

The transmission component 804 may transmit communications, such as reference signals, control information, data communications, or a combination thereof, to the apparatus 806. In some aspects, one or more other components of the apparatus 806 may generate communications and may provide the generated communications to the transmission component 804 for transmission to the apparatus 806. In some aspects, the transmission component 804 may perform signal processing on the generated communications (such as filtering, amplification, modulation, digital-to-analog conversion, multiplexing, interleaving, mapping, or encoding, among other examples), and may transmit the processed signals to the apparatus 806. In some aspects, the transmission component 804 may include one or more antennas, a modulator, a transmit MIMO processor, a transmit processor, a controller/processor, a memory, or a combination thereof, of the UE described above in connection with Fig. 2. In some aspects, the transmission component 804 may be co-located with the reception component 802 in a transceiver.

The reception component 802 may receive, from a base station, information indicating one or more FFP configurations in an FBE mode. The reception component 802 may receive, from the base station, DCI scheduling an uplink transmission, wherein the DCI includes content to enable or disable a UE-initiated channel occupancy time using the one or more FFP configurations. The determination component 808 may determine whether to initiate a channel occupancy time or share a channel occupancy time initiated by the base station to perform the uplink transmission based at least in part on the content in the DCI scheduling the uplink transmission.

The initiation component 810 may initiate the channel occupancy time to perform the uplink transmission based at least in part on the content in the DCI enabling the UE-initiated channel occupancy time and the uplink transmission having a starting symbol aligned with a starting time of an FFP associated with the one or more FFP configurations. The transmission component 804 may perform the uplink transmission at the starting time of the FFP based at least in part on initiating the channel occupancy time.

The determination component 808 may determine that the one or more FFP configurations are associated with multiple FFPs that have different starting times. The selection component 812 may select, among the multiple FFPs, the FFP in which to initiate the channel occupancy time based at least in part on the FFP having the starting time that is aligned with the starting symbol of the uplink transmission.

The determination component 808 may determine that the one or more FFP configurations are associated with multiple FFPs that have the same starting time. The selection component 812 may select the FFP in which to initiate the channel occupancy time based at least in part on one or more bits in the DCI that indicate, among the multiple FFPs, the FFP in which to initiate the channel occupancy time.

The initiation component 810 may refrain from initiating the channel occupancy time based at least in part on determining that the content in the DCI disables the UE-initiated channel occupancy time, or based at least in part on determining that the uplink transmission has a starting symbol that is not aligned with a starting time of at least one FFP associated with the one or more FFP configurations.

The transmission component 804 may perform the uplink transmission in a channel occupancy time initiated by the base station based at least in part on determining that the uplink transmission and the DCI that enables or disables the UE-initiated channel occupancy time are in the channel occupancy time initiated by the base station.

The transmission component 804 may cancel the uplink transmission based at least in part on determining that the uplink transmission or the DCI that enables or disables the UE-initiated channel occupancy time is not in a channel occupancy time initiated by the base station.

The number and arrangement of components shown in Fig. 8 are provided as an example. In practice, there may be additional components, fewer components, different components, or differently arranged components than those shown in Fig. 8. Furthermore, two or more components shown in Fig. 8 may be implemented within a single component, or a single component shown in Fig. 8 may be implemented as multiple, distributed components. Additionally, or alternatively, a set of (one or more) components shown in Fig. 8 may perform one or more functions described as being performed by another set of components shown in Fig. 8.

Fig. 9 is a block diagram of an example apparatus 900 for wireless communication. The apparatus 900 may be a base station, or a base station may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904.

In some aspects, the apparatus 900 may be configured to perform one or more operations described herein in connection with Figs. 5A-5E. Additionally, or alternatively, the apparatus 900 may be configured to perform or direct operations associated with one or more processes described herein, such as process 700 of Fig. 7. In some aspects, the apparatus 900 and/or one or more components shown in Fig. 9 may include one or more components of the base station described above in connection with Fig. 2. Additionally, or alternatively, one or more components shown in Fig. 9 may be implemented within one or more components of the base station described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 906. In some aspects, the reception component 902 may include one or more antennas, a demodulator, a MIMO detector, a receive processor, a controller/processor, a memory, or a combination thereof, of the base station described above in connection with Fig. 2.

The transmission component 904 may transmit communications, such as reference signals, control information, data communications, or a combination thereof, to the apparatus 906. In some aspects, one or more other components of the apparatus 906 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modulator, a transmit MIMO processor, a transmit processor, a controller/processor, a memory, or a combination thereof, of the base station described above in connection with Fig. 2. In some aspects, the transmission component 904 may be co-located with the reception component 902 in a transceiver.

The transmission component 904 may transmit, to a UE, information indicating one or more FFP configurations in an FBE mode. The transmission component 904 may transmit, to the UE, DCI scheduling an uplink transmission, wherein the DCI includes content to enable or disable a UE-initiated channel occupancy time using the one or more FFP configurations. Accordingly, in some aspects, the UE may determine whether to initiate a channel occupancy time or share a channel occupancy time initiated by the base station to perform the uplink transmission based at least in part on the content in the DCI scheduling the uplink transmission.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

The foregoing disclosure provides illustration and description, but is not intended to be exhaustive or to limit the aspects to the precise forms disclosed.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method of wireless communication performed by a user equipment, UE (120), comprising:
receiving (610), from a base station (110), information indicating one or more fixed frame period, FFP, configurations in a frame based equipment, FBE, mode;
receiving (620), from the base station (110), downlink control information, DCI, scheduling an uplink transmission, wherein the DCI includes content to enable or disable a UE-initiated channel occupancy time using the one or more FFP configurations;
determining (630) whether to initiate a channel occupancy time or share a channel occupancy time initiated by the base station (110) to perform the uplink transmission based at least in part on the content in the DCI scheduling the uplink transmission;
initiating the channel occupancy time to perform the uplink transmission based at least in part on the content in the DCI enabling the UE-initiated channel occupancy time and the uplink transmission having a starting symbol aligned with a starting time of an FFP associated with the one or
more FFP configurations, wherein the initiating comprises:
determining that the one or more FFP configurations are associated with multiple FFPs that have different starting times, and selecting, among the multiple FFPs, the FFP in which to initiate the channel occupancy time based at least in part on the FFP having the starting time that is aligned with the starting symbol of the uplink transmission, or
determining that the one or more FFP configurations are associated with multiple FFPs that have the same starting time, and selecting the FFP in which to initiate the channel occupancy time based at least in part on one or more bits in the DCI that indicate, among the multiple FFPs, the FFP in which to initiate the channel occupancy time; and
performing the uplink transmission at the starting time of the FFP based at least in part on initiating the channel occupancy time.

2. The method of claim 1, further comprising:
refraining from initiating the channel occupancy time based at least in part on determining that the content in the DCI disables the UE-initiated channel occupancy time, or based at least in part on determining that the uplink transmission has a starting symbol that is not aligned with a starting time of at least one FFP associated with the one or more FFP configurations.

3. The method of claim 2, further comprising:
performing the uplink transmission in a channel occupancy time initiated by the base station (110) based at least in part on determining that the uplink transmission and the DCI that enables or disables the UE-initiated channel occupancy time are in the channel occupancy time initiated by the base station (110).

4. The method of claim 2, further comprising:
cancelling the uplink transmission based at least in part on determining that the uplink transmission or the DCI that enables or disables the UE-initiated channel occupancy time is not in a channel occupancy time initiated by the base station (110).

5. A user equipment, UE (120), for wireless communication, comprising:
means for receiving, from a base station (110), information indicating one or more fixed frame period, FFP, configurations in a frame based equipment, FBE, mode;
means for receiving, from the base station (110), downlink control information, DCI, scheduling an uplink transmission, wherein the DCI includes content to enable or disable a UE-initiated channel occupancy time using the one or more FFP configurations;
means for determining whether to initiate a channel occupancy time or share a channel occupancy time initiated by the base station (110) to perform the uplink transmission based at least in part on the content in the DCI scheduling the uplink transmission;
means for initiating the channel occupancy time to perform the uplink transmission based at least in part on the content in the DCI enabling the UE-initiated channel occupancy time and the uplink transmission having a starting symbol aligned with a starting time of an FFP associated with the one or more FFP configurations ,
wherein the means for initiating comprises:
means for determining that the one or more FFP configurations are associated with multiple FFPs that have different starting times, and means for selecting, among the multiple FFPs, the FFP in which to initiate the channel occupancy time based at least in part on the FFP having the starting time that is aligned with the starting symbol of the uplink transmission, or
means for determining that the one or more FFP configurations are associated with multiple FFPs that have the same starting time, and means for selecting the FFP in which to initiate the channel occupancy time based at least in part on one or more bits in the DCI that indicate, among the multiple FFPs, the FFP in which to initiate the channel occupancy time; and
means for performing the uplink transmission at the starting time of the FFP based at least in part on initiating the channel occupancy time.

6. The UE of claim 5, further comprising:
means for refraining from initiating the channel occupancy time based at least in part on determining that the content in the DCI disables the UE-initiated channel occupancy time, or based at least in part on determining that the uplink transmission has a starting symbol that is not aligned with a starting time of at least one FFP associated with the one or more FFP configurations.

## Patentansprüche

1. Ein Verfahren zur drahtlosen Kommunikation, das von einem Benutzergerät, UE (120), durchgeführt wird, aufweisend:
Empfangen (610), von einer Basisstation (110), von Informationen, die eine oder mehrere Konfigurationen mit fester Rahmenperiode, FFP, in einem rahmenbasierten Geräte-, FBE-, Modus anzeigen;
Empfangen (620), von der Basisstation (110), von Abwärtsverbindungssteuerinformationen, DCI, die eine Aufwärtsverbindungsübertragung planen, wobei die DCI Inhalt beinhalten, um eine UE-initiierte Kanalbelegungszeit unter Verwendung der einen oder der mehreren FFP-Konfigurationen zu aktivieren oder zu deaktivieren;
Bestimmen (630), ob eine Kanalbelegungszeit initiiert oder eine von der Basisstation (110) initiierte Kanalbelegungszeit geteilt werden soll, um die Aufwärtsverbindungsübertragung durchzuführen, basierend zumindest teilweise auf dem Inhalt in den DCI, die die Aufwärtsverbindungsübertragung planen;
Initiieren der Kanalbelegungszeit, um die Aufwärtsverbindungsübertragung durchzuführen, basierend zumindest teilweise auf dem Inhalt in den DCI, die die UE-initiierte Kanalbelegungszeit und die Aufwärtsverbindungsübertragung ermöglichen, die ein Startsymbol aufweisen, das mit einer Startzeit einer FFP ausgerichtet ist, die mit der einen oder den mehreren FFP-Konfigurationen assoziiert ist, wobei das Initiieren aufweist:
Bestimmen, dass die eine oder die mehreren FFP-Konfigurationen mit mehreren FFPs assoziiert sind, die unterschiedliche Startzeiten aufweisen, und Auswählen, unter den mehreren FFPs, der FFP, in der die Kanalbelegungszeit initiiert werden soll, basierend zumindest teilweise auf der FFP, die die Startzeit aufweist, die mit dem Startsymbol der Aufwärtsverbindungsübertragung ausgerichtet ist, oder
Bestimmen, dass die eine oder die mehreren FFP-Konfigurationen mit mehreren FFPs assoziiert sind, die die gleiche Startzeit aufweisen, und Auswählen der FFP, in der die Kanalbelegungszeit initiiert werden soll, basierend zumindest teilweise auf einem oder mehreren Bits in den DCI, die unter den mehreren FFPs die FFP anzeigen, in der die Kanalbelegungszeit initiiert werden soll; und
Durchführen der Aufwärtsverbindungsübertragung zu der Startzeit der FFP basierend zumindest teilweise auf dem Initiieren der Kanalbelegungszeit.

2. Das Verfahren gemäß Anspruch 1, weiter aufweisend:
Unterlassen des Initiierens der Kanalbelegungszeit basierend zumindest teilweise auf dem Bestimmen, dass der Inhalt in den DCI die UE-initiierte Kanalbelegungszeit deaktiviert, oder basierend zumindest teilweise auf dem Bestimmen, dass die Aufwärtsverbindungsübertragung ein Startsymbol aufweist, das nicht mit einer Startzeit von zumindest einer FFP ausgerichtet ist, die mit der einen oder den mehreren FFP-Konfigurationen assoziiert ist.

3. Das Verfahren gemäß Anspruch 2, weiter aufweisend:
Durchführen der Aufwärtsverbindungsübertragung in einer Kanalbelegungszeit, die von der Basisstation (110) initiiert wird, basierend zumindest teilweise auf dem Bestimmen, dass die Aufwärtsverbindungsübertragung und die DCI, die die UE-initiierte Kanalbelegungszeit aktivieren oder deaktivieren, in der Kanalbelegungszeit sind, die von der Basisstation (110) initiiert wird.

4. Das Verfahren gemäß Anspruch 2, weiter aufweisend:
Abbrechen der Aufwärtsverbindungsübertragung basierend zumindest teilweise auf dem Bestimmen, dass die Aufwärtsverbindungsübertragung oder die DCI, die die UE-initiierte Kanalbelegungszeit aktivieren oder deaktivieren, nicht in einer Kanalbelegungszeit sind, die von der Basisstation (110) initiiert wird.

5. Ein Benutzergerät, UE (120), zur drahtlosen Kommunikation, aufweisend:
Mittel zum Empfangen, von einer Basisstation (110), von Informationen, die eine oder mehrere Konfigurationen mit fester Rahmenperiode, FFP, in einem rahmenbasierten Geräte-, FBE-, Modus anzeigen;
Mittel zum Empfangen, von der Basisstation (110), von Abwärtsverbindungssteuerinformationen, DCI, die eine Aufwärtsverbindungsübertragung planen, wobei die DCI Inhalt beinhalten, um eine UE-initiierte Kanalbelegungszeit unter Verwendung der einen oder der mehreren FFP-Konfigurationen zu aktivieren oder zu deaktivieren;
Mittel zum Bestimmen, ob eine Kanalbelegungszeit initiiert oder eine von der Basisstation (110) initiierte Kanalbelegungszeit geteilt werden soll, um die Aufwärtsverbindungsübertragung durchzuführen, basierend zumindest teilweise auf dem Inhalt in den DCI, die die Aufwärtsverbindungsübertragung planen;
Mittel zum Initiieren der Kanalbelegungszeit, um die Aufwärtsverbindungsübertragung durchzuführen, basierend zumindest teilweise auf dem Inhalt in den DCI, die die UE-initiierte Kanalbelegungszeit und die Aufwärtsverbindungsübertragung ermöglichen, die ein Startsymbol aufweisen, das mit einer Startzeit einer FFP ausgerichtet ist, die mit der einen oder den mehreren FFP-Konfigurationen assoziiert ist, wobei das Mittel zum Initiieren aufweist:
Mittel zum Bestimmen, dass die eine oder die mehreren FFP-Konfigurationen mit mehreren FFPs assoziiert sind, die unterschiedliche Startzeiten aufweisen, und Mittel zum Auswählen, unter den mehreren FFPs, der FFP, in der die Kanalbelegungszeit initiiert werden soll, basierend zumindest teilweise auf der FFP, die die Startzeit aufweist, die mit dem Startsymbol der Aufwärtsverbindungsübertragung ausgerichtet ist, oder
Mittel zum Bestimmen, dass die eine oder die mehreren FFP-Konfigurationen mit mehreren FFPs assoziiert sind, die die gleiche Startzeit aufweisen, und Mittel zum Auswählen der FFP, in der die Kanalbelegungszeit initiiert werden soll, basierend zumindest teilweise auf einem oder mehreren Bits in den DCI, die unter den mehreren FFPs die FFP anzeigen, in der die Kanalbelegungszeit initiiert werden soll; und
Mittel zum Durchführen der Aufwärtsverbindungsübertragung zu der Startzeit der FFP basierend zumindest teilweise auf dem Initiieren der Kanalbelegungszeit.

6. Das UE gemäß Anspruch 5, weiter aufweisend:
Mittel zum Unterlassen des Initiierens der Kanalbelegungszeit basierend zumindest teilweise auf dem Bestimmen, dass der Inhalt in den DCI die UE-initiierte Kanalbelegungszeit deaktiviert, oder basierend zumindest teilweise auf dem Bestimmen, dass die Aufwärtsverbindungsübertragung ein Startsymbol aufweist, das nicht mit einer Startzeit von zumindest einer FFP ausgerichtet ist, die mit der einen oder den mehreren FFP-Konfigurationen assoziiert ist.

## Revendications

1. Un procédé de communication sans fil réalisé par un équipement utilisateur, UE (120), comprenant :
la réception (610), à partir d'une station de base (110), d'une information indiquant une ou plusieurs configurations de période de trame fixe, FFP, dans un mode d'équipement à base de trame, FBE ;
la réception (620), à partir de la station de base (110), d'une information de contrôle de liaison descendante, DCI, planifiant une transmission de liaison montante, dans lequel la DCI inclut un contenu pour activer ou désactiver un temps d'occupation de canal initié par l'UE en utilisant les une ou plusieurs configurations FFP ;
la détermination (630) d'initier un temps d'occupation de canal ou bien de partager un temps d'occupation de canal initié par la station de base (110) pour réaliser la transmission de liaison montante sur la base au moins en partie du contenu dans la DCI planifiant la transmission de liaison montante ;
l'initiation du temps d'occupation de canal pour réaliser la transmission de liaison montante sur la base au moins en partie du contenu dans la DCI activant le temps d'occupation de canal initié par UE et la transmission de liaison montante ayant un symbole de démarrage aligné avec un temps de démarrage d'une FFP associée aux une ou plusieurs configurations FFP, dans lequel l'initiation comprend :
la détermination que les une ou plusieurs configurations FFP sont associées à de multiples FFP qui ont des temps de démarrage différents, et la sélection, parmi les multiples FFP, de la FFP dans laquelle initier le temps d'occupation de canal sur la base au moins en partie de la FFP ayant le temps de démarrage qui est aligné avec le symbole de démarrage de la transmission de liaison montante, ou
la détermination que les une ou plusieurs configurations FFP sont associées à de multiples FFP qui ont le même temps de démarrage, et la sélection de la FFP dans laquelle initier le temps d'occupation de canal sur la base au moins en partie d'un ou plusieurs bits dans la DCI qui indiquent, parmi les multiples FFP, le FFP dans laquelle initier le temps d'occupation de canal ; et
la réalisation de la transmission de liaison montante au temps de démarrage de la FFP sur la base au moins en partie de l'initiation du temps d'occupation de canal.

2. Le procédé selon la revendication 1, comprenant en outre :
la non-initiation du temps d'occupation de canal sur la base au moins en partie de la détermination que le contenu dans la DCI désactive le temps d'occupation de canal initié par l'UE, ou sur la base au moins en partie de la détermination que la transmission de liaison montante présente un symbole de démarrage qui n'est pas aligné avec un temps de démarrage d'au moins une FFP associée aux une ou plusieurs configurations FFP.

3. Le procédé selon la revendication 2, comprenant en outre :
la réalisation de la transmission de liaison montante dans un temps d'occupation de canal initié par la station de base (110) sur la base au moins en partie de la détermination que la transmission de liaison montante et la DCI qui active ou désactive le temps d'occupation de canal initié par l'UE sont dans le temps d'occupation de canal initié par la station de base (110).

4. Le procédé selon la revendication 2, comprenant en outre :
l'annulation de la transmission de liaison montante sur la base au moins en partie de la détermination que la transmission de liaison montante ou la DCI qui active ou désactive le temps d'occupation de canal initié par l'UE n'est pas dans un temps d'occupation de canal initié par la station de base (110).

5. Un équipement utilisateur, UE (120) pour la communication sans fil, comprenant :
un moyen pour recevoir, à partir d'une station de base (110), une information indiquant une ou plusieurs configurations de période de trame fixe, FFP, dans un mode d'équipement à base de trame, FBE ;
un moyen pour recevoir, à partir de la station de base (110), une information de contrôle de liaison descendante, DCI, planifiant une transmission de liaison montante, dans lequel la DCI inclut un contenu pour activer ou désactiver un temps d'occupation de canal initié par l'UE en utilisant les une ou plusieurs configurations FFP ;
un moyen pour déterminer d'initier un temps d'occupation de canal ou bien de partager un temps d'occupation de canal initié par la station de base (110) pour réaliser la transmission de liaison montante sur la base au moins en partie du contenu dans la DCI planifiant la transmission de liaison montante ;
un moyen pour initier le temps d'occupation de canal pour réaliser la transmission de liaison montante sur la base au moins en partie du contenu dans la DCI activant le temps d'occupation de canal initié par UE et la transmission de liaison montante ayant un symbole de démarrage aligné avec un temps de démarrage d'une FFP associée aux une ou plusieurs configurations FFP,
dans lequel le moyen pour initier comprend :
un moyen pour déterminer que les une ou plusieurs configurations FFP sont associées à de multiples FFP qui ont des temps de démarrage différents, et
un moyen pour sélectionner, parmi les multiples FFP, la FFP dans laquelle initier le temps d'occupation de canal sur la base au moins en partie de la FFP ayant le temps de démarrage qui est aligné avec le symbole de démarrage de la transmission de liaison montante, ou
un moyen pour déterminer que les une ou plusieurs configurations FFP sont associées à de multiples FFP qui ont le même temps de démarrage, et
un moyen pour sélectionner la FFP dans laquelle initier le temps d'occupation de canal sur la base au moins en partie d'un ou plusieurs bits dans la DCI qui indiquent, parmi les multiples FFP, le FFP dans laquelle initier le temps d'occupation de canal ; et
un moyen pour réaliser la transmission de liaison montante au temps de démarrage de la FFP sur la base au moins en partie de l'initiation du temps d'occupation de canal.

6. L'UE selon la revendication 5, comprenant en outre :
un moyen pour ne pas initier le temps d'occupation de canal sur la base au moins en partie de la détermination que le contenu dans la DCI désactive le temps d'occupation de canal initié par l'UE, ou sur la base au moins en partie de la détermination que la transmission de liaison montante présente un symbole de démarrage qui n'est pas aligné avec un temps de démarrage d'au moins une FFP associée aux une ou plusieurs configurations FFP.
